# EUROPEAN PATENT SPECIFICATION

(11) **EP 4 123 310 B1**
(45) Date of publication and mention of the grant of the patent: **09.07.2025**
(21) Application number: 21771338.7
(22) Date of filing: 18.01.2021
(51) Int. Cl.: G01N 35/00

(54) **AUTOMATIC ANALYSIS DEVICE**
AUTOMATISCHE ANALYSEVORRICHTUNG
DISPOSITIF D'ANALYSE AUTOMATIQUE

(30) Priority: 19.03.2020 JP 2020048865
(43) Date of publication of application: 25.01.2023
(73) Proprietor: HITACHI HIGH-TECH CORPORATION, Tokyo 105-6409 (JP)
(72) Inventor: TAKEUCHI, Miwa, Tokyo 105-6409 (JP); USHIKU, Emiko, Tokyo 105-6409 (JP)
(74) Representative: MERH-IP Matias Erny Reichl Hoffmann Patentanwälte PartG mbB
(86) International application number: PCT/JP2021/001436
(87) International publication number: WO 2021/186874

(56) References cited:
- WO-A1-2006/009251
- WO-A1-2010/073479
- JP-A- 2003 057 248
- JP-A- 2007 248 088
- JP-A- 2009 180 616
- JP-A- 2009 222 610
- JP-A- 2010 133 870
- JP-A- 2012 032 188
- JP-A- 2016 527 485
- JP-A- H09 127 122
- US-A1- 2010 161 267
- US-A1- 2011 301 917
- US-A1- 2019 146 466
- US-B2- 9 483 441

## Description

### Technical Field

The present invention relates to an automatic analysis device that analyzes a sample.

### Background Art

An automatic analysis device is used to measure a concentration of a specific component contained in a sample such as blood or urine. More specifically, the automatic analysis device measures absorbance of a reaction solution obtained by the sample reacting with a reagent, potential of an electrolyte solution obtained by diluting the sample, and the like, and measurement results of the absorbance, the potential, and the like are converted into the concentration of the specific component using a calibration curve created in advance. The calibration curve is created by executing calibration including measurement of the absorbance, the potential, and the like using a plurality of standard solutions having known concentrations or a calibration solution. Further, in order to execute quality control on the automatic analysis device, it is periodically confirmed that a measurement value of a quality control substance having a known concentration is within a range of quality control. It is desirable that the calibration is executed with an appropriate implementation content and at an appropriate interval according to results of the quality control or the like.

PTL 1 discloses an automatic analysis device that notifies an implementation content and a period of calibration based on a result of comparing a variation pattern stored for a combination of results of quality control and calibration with a measured variation pattern.
PTL 2 discloses an automatic analyzer and a precision management method of the automatic analyzer, in which an analyte is analyzed by reacting the analyte with a reagent.
PTL 3 discloses a method for performing quality control on a diagnostic analyzer which includes receiving control measurement values from each of a plurality of diagnostic analyzers.
PTL 4 discloses an estimation process in an automatic analyzer in which estimations are automatically calculated for each analysis item during quality control, and are compared with uncertainties obtained during actual QC sample measurement, for monitoring and evaluating the analyzer performance.

### Citation List

### Patent Literature

PTL 1: JP-A-2012-026815
PTL 2: JP 2010 133870 A
PTL 3: US 2019/146466 A1
PTL 4: US 2011/301917 A1

### Summary of Invention

### Technical Problem

However, PTL 1 does not disclose supporting an analysis of a cause of variation occurring in a measurement value of a quality control substance. When the measurement value of the quality control substance varies, it is desirable to quickly analyze the cause of variation. For example, when it is possible to estimate whether the cause of variation in the measurement value of the quality control substance is a lot change of a calibration solution used for calibration, a subsequent measure is easy to be taken.

Therefore, an object of the invention is to provide an automatic analysis device that estimates a cause of variation in a measurement value of a quality control substance.

### Solution to Problem

The above mentioned object is achieved by the appended set of claims. In particular, the invention provides an automatic analysis device for analyzing a sample. The automatic analysis device includes: an acquisition unit configured to acquire a variation amount of a measurement value of a quality control substance used for quality control; a calculation unit configured to calculate a predicted variation amount based on a difference value between concentration values of a calibration solution used for calibration before and after a lot change; and an estimation unit configured to estimate a cause of variation occurring in the measurement value of the quality control substance based on a comparison result between the variation amount and the predicted variation amount.

### Advantageous Effects of Invention

According to the invention, it is possible to provide an automatic analysis device that estimates a cause of variation in a measurement value of a quality control substance.

### Brief Description of Drawings

[FIG. 1] FIG. 1 is a diagram showing an example of a configuration of an automatic analysis device.
[FIG. 2] FIG. 2 is a diagram showing an example of a configuration of an electrolyte measurement unit.
[FIG. 3] FIG. 3 is a diagram showing an example of a daily difference variation graph which shows a periodic measurement result of a quality control substance.
[FIG. 4] FIG. 4 is a diagram showing an example of a daily difference variation graph in which a variation occurs in measurement values of the quality control substance due to a lot change of a calibration solution.
[FIG. 5] FIG. 5 is a diagram showing an example of a flow of processing according to a first embodiment.
[FIG. 6] FIG. 6 is a diagram showing an example of a flow of processing for estimating a cause of variation.
[FIG. 7] FIG. 7 is a diagram showing a display example when a variation occurs in measurement values of the quality control substance due to the lot change of the calibration solution.
[FIG. 8] FIG. 8 is a diagram showing a display example of an input value guide.

### Description of Embodiments

Hereinafter, preferred embodiments of an automatic analysis device according to the invention will be described with reference to the accompanying drawings. In the following description and the accompanying drawings, components that have the same function and configuration are denoted by the same reference numerals, and repeated descriptions thereof are omitted. The drawings schematically represent the embodiments, and a real object may be shown in a simplified manner.

### First Embodiment

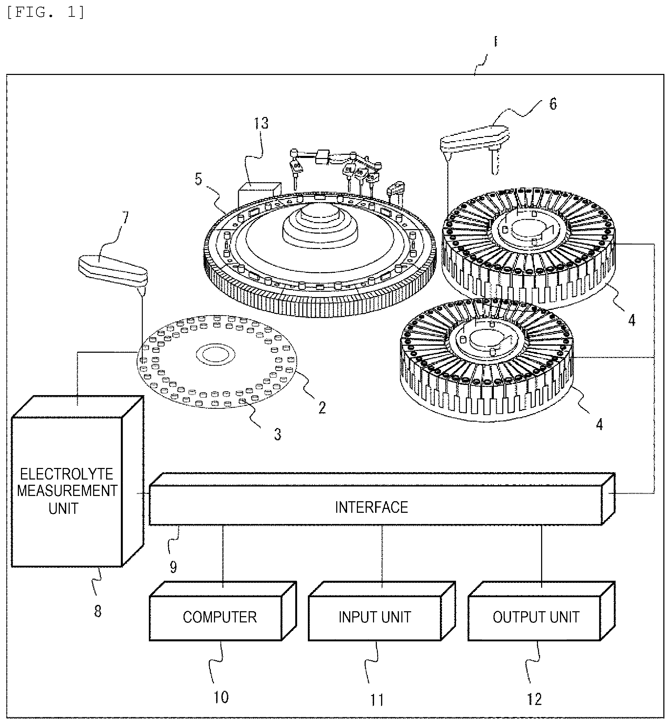

An example of a configuration of an automatic analysis device 1 will be described with reference to FIG. 1. The automatic analysis device 1 includes a sample disk 2, a reagent disk 4, a reaction container 5, a reagent dispensing unit 6, a sample dispensing unit 7, an electrolyte measurement unit 8, an interface 9, a computer 10, an input unit 11, an output unit 12, and a photometer 13.

On the sample disk 2, sample cups 3 each containing a sample such as blood or urine supplied from a patient or a standard sample used for calibration and quality control are concentrically arranged and loaded. The sample cups 3 may not be loaded on the sample disk 2 but on a sample rack in which the sample cups 3 are arranged on a straight line.

The standard sample used for calibration includes a standard solution having a known concentration of a specific component and a calibration solution. The standard solution is a solution containing the specific component, and has at least a concentration in the vicinity of an upper limit value and a concentration in the vicinity of a lower limit value of a measurement range of the automatic analysis device 1. That is, at least two standard solutions are used. The calibration solution is a solution that simulates a sample supplied from the patient.

Reagents to be reacted with a sample or the like are stored on the reagent disk 4. Each reagent is dispensed into the reaction container 5 from the reagent disk 4 by the reagent dispensing unit 6. Further, the sample or the like is dispensed into the reaction container 5 from a sample cup 3 by the sample dispensing unit 7. The reagent, the sample, and the like that are dispensed into the reaction container 5 react and develop a color by being maintained at a predetermined temperature, and absorbance of a color-developed liquid is measured by the photometer 13. The reagent disk 4, the reaction container 5, the photometer 13, and the like related to absorbance measurement are collectively referred to as colorimetric units.

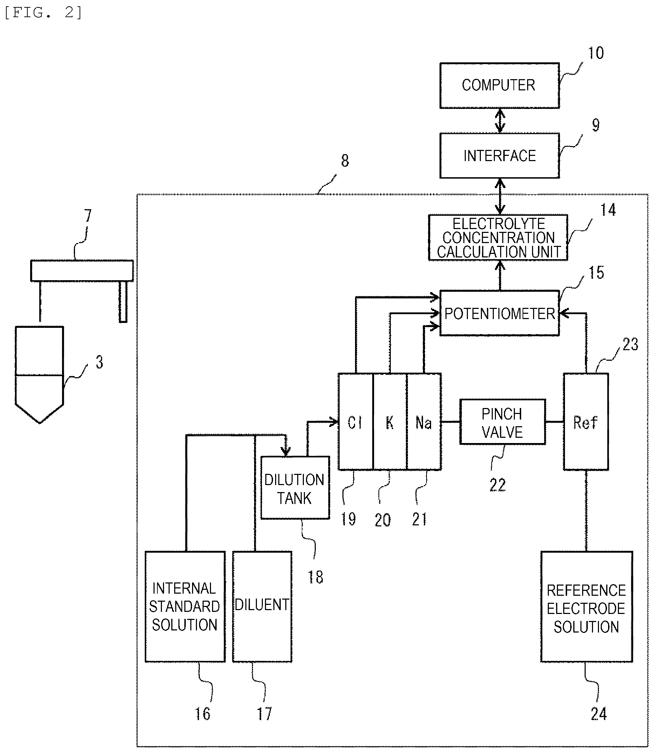

The electrolyte measurement unit 8 is a unit that measures potential of an electrolyte solution obtained by diluting the sample or the standard sample, and will be described later with reference to FIG. 2.

The computer 10 controls units connected through the interface 9, calculates a concentration value of the specific component based on results measured by the colorimetric units or the electrolyte measurement unit 8, and outputs the calculated concentration value to the output unit 12. The output unit 12 is, for example, a liquid crystal monitor, a touch panel, or a printer, and displays and prints the concentration value of the specific component output from the computer 10. Measurement conditions and the like in the colorimetric units or the electrolyte measurement unit 8 may be received from the input unit 11. The input unit 11 is, for example, a keyboard or a mouse, and when the output unit 12 is a touch panel, a graphical user interface (GUI) displayed on the touch panel functions as the input unit 11.

An example of a configuration of the electrolyte measurement unit 8 will be described with reference to FIG. 2. The electrolyte measurement unit 8 is a unit that measures a concentration of ions contained in the sample or the standard sample, and includes an electrolyte concentration calculation unit 14, a potentiometer 15, a dilution tank 18, a Cl electrode 19, a K electrode 20, a Na electrode 21, a pinch valve 22, and a reference electrode 23.

In the dilution tank 18, the sample or the standard sample dispensed from the sample cup 3 by the sample dispensing unit 7 is diluted by the diluent 17 to a concentration suitable for measurement. The diluted sample or the diluted standard sample is passed through the Cl electrode 19, the K electrode 20, and the Na electrode 21 by operations of the pinch valve 22. Potential corresponding to ion concentrations of Cl ions, K ions, and Na ions contained in the passing-through solution is generated in the Cl electrode 19, the K electrode 20, and the Na electrode 21, respectively. In addition, since potential corresponding to a concentration of a reference electrode solution 24 is also generated in the reference electrode 23, a potential difference between each of the Cl electrode 19, the K electrode 20, and the Na electrode 21 and the reference electrode 23 is measured by the potentiometer 15. Prior to measurement of a potential difference of the diluted sample or the diluted standard sample, a potential difference of an internal standard solution 16 with respect to the reference electrode solution 24 is measured as a reference potential of the electrolyte measurement unit 8. The potential difference measured by the potentiometer 15 is sent to the electrolyte concentration calculation unit 14.

The electrolyte concentration calculation unit 14 is a calculation unit that converts the potential difference measured for the sample into the ion concentrations of the Cl ions, the K ions, and the Na ions contained in the sample, and includes, for example, a central processing unit (CPU) and a memory. The computer 10 may function as the electrolyte concentration calculation unit 14. In order to convert the measured potential difference into the concentration of the specific component, a calibration curve, which is a straight line representing a relationship between the potential difference and the concentration, is used. The calibration curve is created by executing calibration including measurement of a potential difference of a plurality of standard solutions having known concentrations or a calibration solution.

Specifically, an inclination of the calibration curve is calculated by setting a potential difference measured for a standard solution having a low concentration and a potential difference measured for a standard solution having a high concentration on a vertical axis and setting concentrations of the two standard solutions on a horizontal axis. Further, a segment of the calibration curve having the calculated inclination is calculated based on the potential difference measured for the calibration solution and a concentration of the calibration solution. The calibration curve created by calibration is stored in the electrolyte concentration calculation unit 14, and is read and used when a concentration of the sample or a quality control substance is calculated.

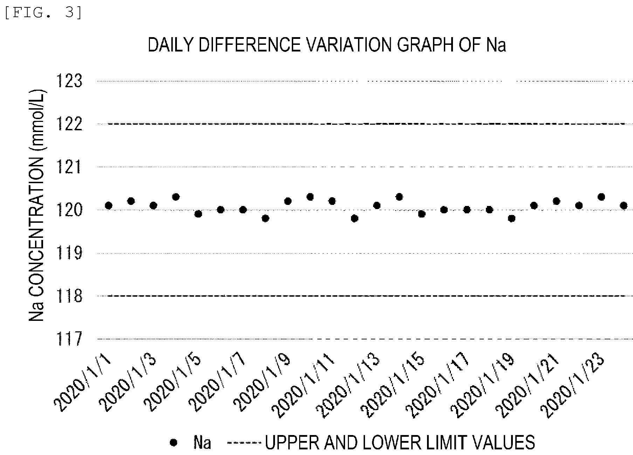

The quality control will be described with reference to FIG. 3. In order to execute quality control on the automatic analysis device 1, it is periodically confirmed, according to a daily difference variation graph or the like, that a measurement value of the quality control substance having a known concentration is within a range of quality control. FIG. 3 is an example of the daily difference variation graph in which a vertical axis represents measurement values of the quality control substance having a known Na concentration and a horizontal axis represents measurement dates, and it is confirmed daily that the measurement values of the concentration of the quality control substance are between upper and lower limit values. The upper and lower limit values are set for each quality control substance, and for example, the quality control may range from (average value - 2 × standard deviation) to (average value + 2 × standard deviation) based on an average value and standard deviation when the same quality control substance is measured a plurality of times.

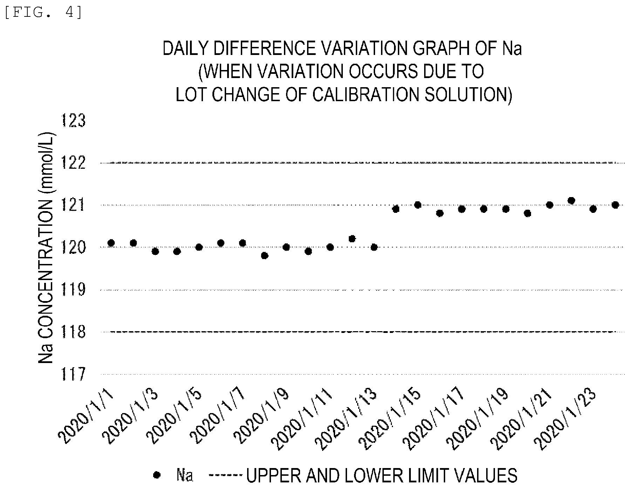

A variation of the measurement value of the quality control substance will be described with reference to FIG. 4. FIG. 4 is an example of the daily difference variation graph in which a variation occurs in measurement values of the quality control substance, and shows a case in which a lot of the calibration solution is changed to 2020/1/14. To create the calibration curve used for calculating the concentration of the quality control substance, a concentration value of the calibration solution provided by a reagent manufacturer and the potential difference measured for the calibration solution are used. Hereinafter, the concentration value of the calibration solution provided by the reagent manufacturer is referred to as a display value. The display value is input into the automatic analysis device by an operator through the input unit 11. When the display value of the calibration solution is denoted by an integer of, for example, 140, an actual concentration of the calibration solution has a width of 139.5 to 140.4. That is, even in a case of the calibration solution having the same display value of 140, actual concentration values between different lots may have a maximum difference of 0.9, and the measurement value of the quality control substance may vary due to use of a different calibration curve according to a difference of an actual concentration value. A cause of variation in the measurement value of the quality control substance is not limited to a lot change of the calibration solution. If the operator misjudges the cause of variation, it takes a long time to deal with the variation.

Therefore, in the present embodiment, the cause of variation in the measurement value of the quality control substance is estimated based on a comparison result between a predicted variation amount, which is calculated based on a difference value between the concentration values of the calibration solution used for calibration before and after the lot change, and a variation amount of the measurement value of the quality control substance.

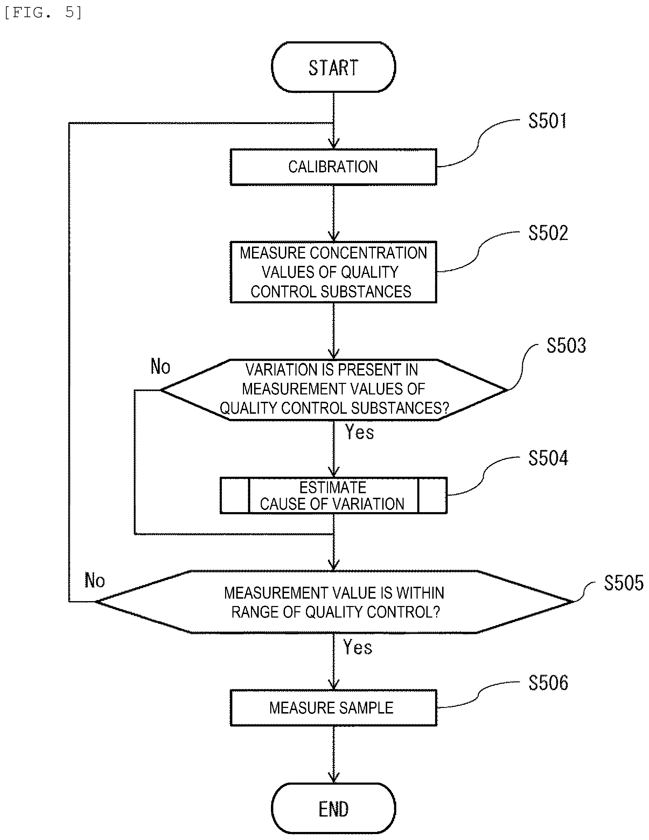

An example of a flow of processing according to the present embodiment will be described for each step with reference to FIG. 5.

### (S501)

The computer 10 causes the colorimetric units or the electrolyte measurement unit 8 to measure the standard solution and the calibration solution, and executes calibration. Specifically, the inclination of the calibration curve is calculated based on measurement values of absorbance or potential differences of the standard solutions having a low concentration and a high concentration and the concentrations of the two standard solutions. Further, a segment of the calibration curve having the calculated inclination is calculated based on measurement values of absorbance or a potential difference of the calibration solution and the display value of the concentration of the calibration solution.

When the lot of the calibration solution is changed, a calibration curve is created based on a display value C_{N} of a concentration of a new lot calibration solution, which is the calibration solution after the lot change, and a measurement value for the new lot calibration solution, and the calibration curve is stored together with the lot change of the calibration solution. In addition to the created calibration curve, a display value Cₒ of a concentration of an old lot calibration solution, which is the calibration solution before the lot change, is stored together with the display value C_{N} of the new lot calibration solution. Further, the measurement values of the absorbance or the potential differences for the old lot calibration solution and the new lot calibration solution are also stored. When the lot of the calibration solution is not changed, the calibration curve is created and stored based on the display value Cₒ of the old lot calibration solution and the measurement value for the old lot calibration solution.

### (S502)

The computer 10 causes the colorimetric units or the electrolyte measurement unit 8 to measure concentration values of at least two quality control substances. Specifically, a measurement value of absorbance or a potential difference of each quality control substance is converted into a concentration value of the quality control substance by the calibration curve calculated in S501. The calculated concentration value may be displayed in the daily difference variation graph.

### (S503)

The computer 10 determines whether a variation is present in the concentration values of the quality control substances measured in S502. Presence or absence of the variation is determined based on, for example, a comparison between an average value of past measurement values ± 2 · standard deviation and the measurement value in S502. Since a measurement value of 120.9 of 2020/1/14 in FIG. 4 is out of a range of 119.8 to 120.2 determined based on an average value of 120.0 of measurement values from 2020/1/1 to 2020/1/13 and a standard deviation of 0.1, it is determined that the variation is present. When the variation is present in the concentration value of the quality control substance, the process proceeds to S504, and when the variation is absent, the process proceeds to S505. A difference between the average value of the past measurement values and the measurement value in S502 is acquired as the variation amount of the measurement value of the quality control substance. That is, the computer 10 functions as an acquisition unit that acquires the variation amount of the measurement value of the quality control substance.

### (S504)

The computer 10 estimates the cause of variation in the measurement value of the concentration of the quality control substance.

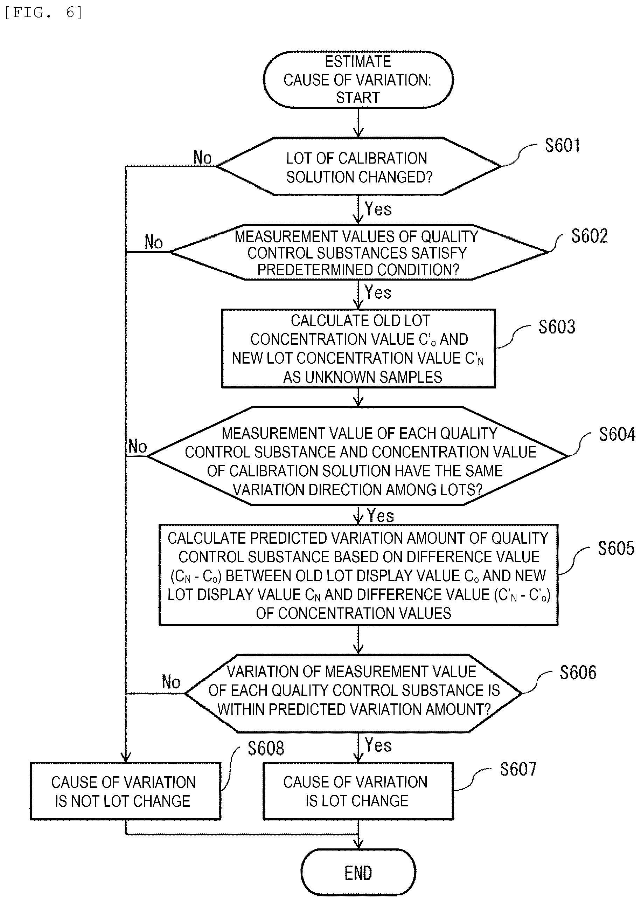

An example of a flow of processing in the present step will be described with reference to FIG. 6.

### (S601)

The computer 10 determines whether the lot of the calibration solution is changed. When the lot is changed, the process proceeds to S602, and when the lot is not changed, the process proceeds to S608.

### (S602)

The computer 10 determines whether the measurement value of each quality control substance satisfies a predetermined condition. The predetermined condition is, for example, a condition in which the number of times of measurement for the measurement value of each quality control substance is equal to or greater than a predetermined number of times, a coefficient of variance (CV) of the measurement value of each quality control substance is equal to or less than a set value, and a variation of the measurement value of each quality control substance is within the set value with respect to a display value. The predetermined number of times is, for example, three times, the set value of the coefficient of variance CV is, for example, 3%, and the set value with respect to the display value is, for example, 3%. When the predetermined condition is satisfied, the process proceeds to S603, and when the predetermined condition is not satisfied, the process proceeds to S608.

### (S603)

The computer 10 calculates an old lot concentration value and a new lot concentration value of the calibration solution as unknown samples. Specifically, measurement values of absorbance or potential differences for the old lot calibration solution and the new lot calibration solution that are stored in S501 are converted into a concentration value C'ₒ of the old lot calibration solution and a concentration value C'_{N} of the new lot calibration solution by the calibration curve created in S501.

### (S604)

The computer 10 determines whether the measurement value of each quality control substance and the concentration value of the calibration solution have the same variation direction among lots. Specifically, it is determined whether positive or negative of the variation amount acquired in S503 is the same as that of a difference value (C'_{N} - C'ₒ) between the concentration values C'ₒ and C'_{N} calculated in S603. When the variation directions are the same, the process proceeds to S605, and when the variation directions are different, the process proceeds to S608.

### (S605)

The computer 10 calculates the predicted variation amount of the concentration value of the quality control substance generated due to the lot change of the calibration solution. That is, the computer 10 functions as a calculation unit that calculates the predicted variation amount. The predicted variation amount is calculated based on a difference value (C_{N} - Cₒ) between an old lot display value Cₒ and a new lot display value C_{N} of the calibration solution and the difference value (C'_{N} - C'ₒ) between the concentration values C'ₒ and C'_{N} calculated in S603. More specifically, a ± set value of a difference {(C'_{N} - C'ₒ) - (C_{N} - Cₒ)} between the difference value (C'_{N} - C'ₒ) and the difference value (C_{N} - Cₒ) is calculated as the predicted variation amount. For example, 50% is used as the set value.

### (S606)

The computer 10 determines whether the variation of the measurement value of each quality control substance is within the predicted variation amount. When the variation is within the predicted variation amount, the process proceeds to S607, and when the variation is not within the predicted variation amount, the process proceeds to S608.

### (S607)

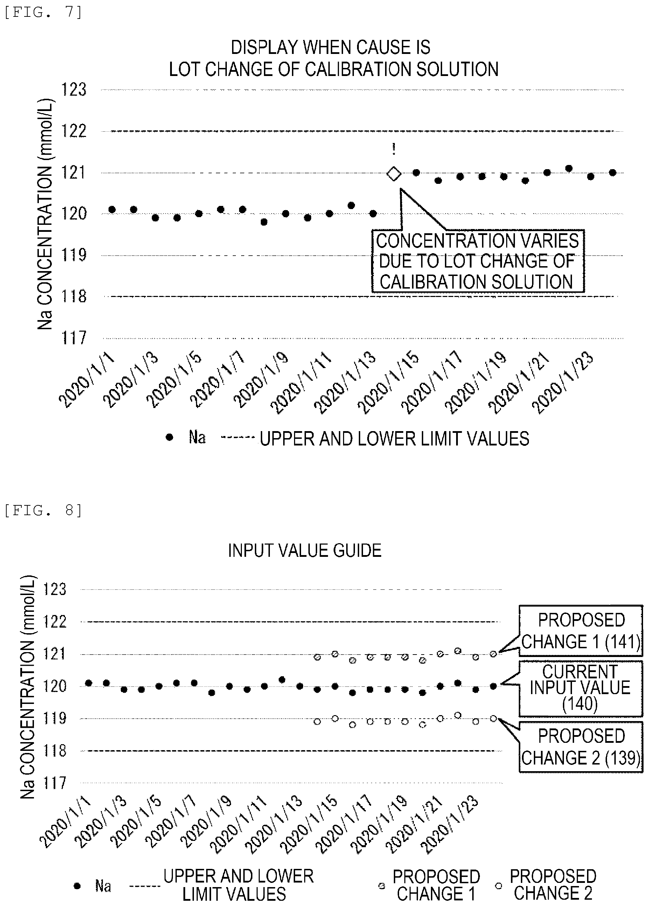

The computer 10 estimates that the cause of variation in the measurement value of the quality control substance is the lot change of the calibration solution. The estimated cause of variation may be displayed in a daily difference variation graph as shown in FIG. 7, for example. In the daily difference variation graph in FIG. 7, a portion where the measurement value of the Na concentration varies is indicated by a marker different from other portions, and a mark for drawing attention and a comment indicating the cause of variation are displayed. Specifically, while other portions are black circular markers, the portion where the measurement value varies is indicated by a white rhombic marker. In addition, "!" is displayed as the mark for drawing attention, and "Concentration varies due to lot change of calibration solution" is displayed as a comment indicating the cause of variation.

### (S608)

The computer 10 estimates that the cause of variation in the measurement value of the quality control substance is not the lot change of the calibration solution. The estimated cause of variation may be displayed as a comment in the daily difference variation graph. Instead of displaying the comment of the cause of variation, the difference value (C'_{N} - C'ₒ) between the measurement values of the concentrations of the calibration solution before and after the lot change may be displayed as a reference.

According to the flow of processing described above, the cause of variation in the measurement value of the concentration of the quality control substance is estimated. That is, the computer 10 functions as an estimation unit that estimates the cause of variation occurring in the measurement value of the quality control substance. The operator may take a measure according to the estimated cause of variation.

The description returns to FIG. 5.

### (S505)

The computer 10 determines whether the concentration value of the quality control substance is within the range of quality control. When the measurement value is within the range of quality control, the process proceeds to S506, and when the measurement value is not within the range, the process returns to S501.

### (S506)

The computer 10 causes the colorimetric units or the electrolyte measurement unit 8 to measure the sample supplied from the patient. A measurement result is output to the output unit 12.

According to the flow of processing described above, when the measurement value of the quality control substance varies, the cause of variation is estimated. Since the operator can take an appropriate measure according to the cause of variation estimated by the automatic analysis device 1, subsequent sample measurement is smoothly executed, and quality of the sample measurement is also maintained.

### Second Embodiment

In the first embodiment, estimation of the cause of variation in the measurement value of the quality control substance is described. It is preferable that the operator takes a measure according to the estimated cause of variation. For example, the concentration value of the calibration solution input through the input unit 11 may be changed within a range of display values provided by the reagent manufacturer. In the present embodiment, presentation of a more appropriate input value will be described.

In many cases, the display value of the calibration solution provided by the reagent manufacturer is in a range of values that can be input, and is denoted by, for example, "140 ± 1" as the display value of Na. Therefore, in the present embodiment, when the process proceeds to S607 in FIG. 6, a more appropriate input value is calculated by the computer 10 and is output to the output unit 12. For example, the display value C_{N} at which the predicted variation amount calculated in S605 is minimized is calculated within the range of display values provided by the reagent manufacturer, and is output as the more appropriate input value.

A plurality of input values may be output, and as shown in FIG. 8, a daily difference variation graph created when each input value is used may be displayed as an input value guide. According to the input value guide in FIG. 8, the operator can quickly determine which input value is to be used.

### Third Embodiment

In the first embodiment, estimation of the cause of variation in the measurement value of the quality control substance is described. When the cause of variation is clear, the measurement value of the quality control substance may be corrected according to the cause of variation. Therefore, in the present embodiment, when the process proceeds to S607 in FIG. 6, the measurement value of the quality control substance is corrected according to the variation amount generated due to the lot change of the calibration solution. Specifically, a deviation {(C'_{N} - C'ₒ) - (C_{N} - Cₒ)} between the difference value (C'_{N} - C'ₒ) between the concentration values of the old and new lots of the calibration solution and the difference value (C_{N} - Cₒ) between the display values is subtracted from the measurement value of the quality control substance to execute correction. Whether to correct the measurement value of the quality control substance is selected based on a setting of the operator.

A plurality of embodiments of the invention are described above. The invention is not limited to the embodiments described above, and the components may be modified without departing from the scope of the invention as defined by the appended claims.

### Reference Signs List

- 1: automatic analysis device
- 2: sample disk
- 3: sample cup
- 4: reagent disk
- 5: reaction container
- 6: reagent dispensing unit
- 7: sample dispensing unit
- 8: electrolyte measurement unit
- 9: interface
- 10: computer
- 11: input unit
- 12: output unit
- 13: photometer
- 14: electrolyte concentration calculation unit
- 15: potentiometer
- 16: internal standard solution
- 17: diluent
- 18: dilution tank
- 19: Cl electrode
- 20: K electrode
- 21: Na electrode
- 22: pinch valve
- 23: reference electrode
- 24: reference electrode solution

## Claims

1. An automatic analysis device (1) for analyzing a sample, the automatic analysis device (1) comprising:
an acquisition unit configured to acquire a variation amount of a measurement value of a quality control substance used for quality control, wherein the variation amount is a difference between the average value of the past measurement values and the measurement value;
a calculation unit configured to calculate a predicted variation amount based on a difference value between concentration values of a calibration solution used for calibration before and after a lot change; and
an estimation unit configured to estimate a cause of variation occurring in the measurement value of the quality control substance based on a comparison result between the variation amount and the predicted variation amount, wherein
the estimation unit is configured to estimate that the lot change of the calibration solution is the cause of variation when the variation amount is within a range of the predicted variation amount.

2. The automatic analysis device (1) according to claim 1, wherein
the calculation unit calculates the predicted variation amount based on a display difference value which is a difference value between display values of a concentration of the calibration solution before and after the lot change and a measurement difference value which is a difference value between measurement values of the concentration of the calibration solution before and after the lot change, wherein a display value is the concentration value of the calibration solution provided by the reagent manufacturer.

3. The automatic analysis device (1) according to claim 2, wherein
the estimation unit estimates that the lot change of the calibration solution is not the cause of variation when directions of the variations of the measurement value of the quality control substance and of the measurement value of the concentration of the calibration solution are different,
wherein the direction of the variation is determined by a sign, which is negative or positive, of the variation amount.

4. The automatic analysis device (1) according to claim 2, wherein
when the estimation unit estimates that the lot change of the calibration solution is the cause of variation, and the calibration solution provided by the reagent manufacturer is in a range of values, the display value, at which the predicted variation amount calculated is minimized, is calculated within the range of display values provided by the reagent manufacturer and is outputted as an input value.

5. The automatic analysis device (1) according to claim 4, wherein
the input value is displayed in a daily difference variation graph indicating a shift in the measurement value of the quality control substance.

6. The automatic analysis device (1) according to claim 2, wherein
when the estimation unit estimates that the lot change of the calibration solution is the cause of variation, the measurement value of the quality control substance is corrected based on the display difference value and the measurement difference value.

7. The automatic analysis device (1) according to claim 2, wherein
when the estimation unit estimates that the lot change of the calibration solution is not the cause of variation, the measurement difference value is displayed in a daily difference variation graph indicating a shift in the measurement value of the quality control substance.

## Patentansprüche

1. Automatische Analysevorrichtung (1) zum Analysieren einer Probe, wobei die automatische Analysevorrichtung (1) umfasst:
eine Erfassungseinheit, die konfiguriert ist, einen Variationsbetrag eines Messwerts einer Qualitätskontrollsubstanz, die für eine Qualitätskontrolle verwendet wird, zu erfassen, wobei der Variationsbetrag ein Unterschied zwischen dem Mittelwert der vergangenen Messwerte und dem Messwert ist;
eine Berechnungseinheit, die konfiguriert ist, einen vorhergesagten Variationsbetrag anhand eines Unterschiedswerts zwischen Konzentrationswerten einer Kalibrierungslösung, die für eine Kalibration verwendet wird, vor und nach einer Losänderung zu berechnen; und
eine Schätzeinheit, die konfiguriert ist, eine Ursache einer Variation, die in dem Messwert der Qualitätskontrollsubstanz auftritt, anhand eines Vergleichsergebnisses zwischen dem Variationsbetrag und dem vorhergesagten Variationsbetrag zu schätzen, wobei
die Schätzeinheit konfiguriert ist, zu schätzen, dass die Losänderung der Kalibrierungslösung die Ursache der Variation ist, wenn der Variationsbetrag innerhalb eines Bereichs des vorhergesagten Variationsbetrags liegt.

2. Automatische Analysevorrichtung (1) nach Anspruch 1,
wobei die Berechnungseinheit den vorhergesagten Variationsbetrag anhand eines Anzeigenunterschiedswerts, der ein Unterschiedswert zwischen Anzeigewerten einer Konzentration der Kalibrierungslösung vor und nach der Losänderung ist, und eines Messunterschiedswerts, der ein Unterschiedswert zwischen Messwerten der Konzentration der Kalibrierungslösung vor und nach der Losänderung ist, berechnet, wobei ein Anzeigenwert der Konzentrationswert der Kalibrierungslösung ist, die durch den Reagenzhersteller bereitgestellt wird.

3. Automatische Analysevorrichtung (1) nach Anspruch 2, wobei
die Schätzeinheit schätzt, dass die Losänderung der Kalibrierungslösung nicht die Ursache der Variation ist, wenn Richtungen der Variationen des Messwerts der Qualitätskontrollsubstanz und des Messwerts der Konzentration der Kalibrierungslösung verschieden sind,
wobei die Richtung der Variation durch ein Vorzeichen des Variationsbetrags, das negativ oder positiv ist, bestimmt wird.

4. Automatische Analysevorrichtung (1) nach Anspruch 2, wobei
dann, wenn die Schätzeinheit schätzt, dass die Losänderung der Kalibrierungslösung die Ursache der Variation ist, und die durch den Reagenzhersteller bereitgestellte Kalibrierungslösung in einem Bereich von Werten ist, der Anzeigenwert, bei dem der berechnete vorhergesagte Variationsbetrag minimiert wird, innerhalb des Bereichs von Anzeigenwerten berechnet wird, der durch den Reagenzhersteller bereitgestellt wird, und als ein Eingabewert ausgegeben wird.

5. Automatische Analysevorrichtung (1) nach Anspruch 4, wobei
der Eingabewert in einem Tagesunterschiedsvariationsgraph angezeigt wird, der eine Verschiebung des Messwerts der Qualitätskontrollsubstanz angibt.

6. Automatische Analysevorrichtung (1) nach Anspruch 2, wobei
dann, wenn die Schätzeinheit schätzt, dass die Losänderung der Kalibrierungslösung die Ursache der Variation ist, der Messwert der Qualitätskontrollsubstanz anhand des Anzeigenunterschiedswerts und des Messunterschiedswerts korrigiert wird.

7. Automatische Analysevorrichtung (1) nach Anspruch 2, wobei
dann, wenn die Schätzeinheit schätzt, dass die Losänderung der Kalibrierungslösung nicht die Ursache der Variation ist, der Messunterschiedswert in einem Tagesunterschiedsvariationsgraphen angezeigt wird, der eine Verschiebung des Messwerts der Qualitätskontrollsubstanz angibt.

## Revendications

1. Dispositif d'analyse automatique (1) destiné à analyser un échantillon, le dispositif d'analyse automatique (1) comprenant :
une unité d'acquisition configurée pour acquérir une amplitude de variation d'une valeur de mesurage d'une substance de contrôle qualité utilisée pour un contrôle qualité, l'amplitude de variation étant une différence entre la valeur moyenne des valeurs de mesurage passées et la valeur de mesurage ;
une unité de calcul configurée pour calculer une amplitude de variation prédite sur la base d'une valeur de différence entre des valeurs de concentration d'une solution d'étalonnage utilisée pour un étalonnage avant et après un changement de lot ; et
une unité d'estimation configurée pour estimer une cause d'une variation survenant dans la valeur de mesurage de la substance de contrôle qualité sur la base d'un résultat de comparaison entre l'amplitude de variation et l'amplitude de variation prédite, dans lequel
l'unité d'estimation est configurée pour estimer que le changement de lot de la solution d'étalonnage est la cause de variation quand l'amplitude de variation est à l'intérieur d'une plage de l'amplitude de variation prédéterminée.

2. Dispositif d'analyse automatique (1) selon la revendication 1, dans lequel l'unité de calcul calcule l'amplitude de variation prédite sur la base d'une valeur de différence d'affichage qui est une valeur de différence entre des valeurs d'affichage d'une concentration de la solution d'étalonnage avant et après le changement de lot et une valeur de différence de mesurage qui est une valeur de différence entre des valeurs de mesurage de la concentration de la solution d'étalonnage avant et après le changement de lot, une valeur d'affichage étant la valeur de concentration de la solution d'étalonnage fournie par le fabricant de réactif.

3. Dispositif d'analyse automatique (1) selon la revendication 2, dans lequel l'unité d'estimation estime que le changement de lot de la solution d'étalonnage n'est pas la cause de variation quand des directions des variations de la valeur de mesurage de la substance de contrôle qualité et de la valeur de mesurage de la concentration de la solution d'étalonnage sont différentes,
dans lequel la direction de la variation est déterminée par un signe, qui est négatif ou positif, de l'amplitude de variation.

4. Dispositif d'analyse automatique (1) selon la revendication 2, dans lequel quand l'unité d'estimation estime que le changement de lot de la solution d'étalonnage est la cause de variation, et que la solution d'étalonnage fournie par le fabricant de réactif est dans une plage de valeurs, la valeur d'affichage, à laquelle l'amplitude de variation prédite calculée est minimisée, est calculée à l'intérieur de la plage de valeurs fournie par le fabricant de réactif et est sortie à titre de valeur d'entrée.

5. Dispositif d'analyse automatique (1) selon la revendication 4, dans lequel la valeur d'entrée est affichée dans un graphique de variation de différence journalière indiquant un décalage dans la valeur de mesurage de la substance de contrôle qualité.

6. Dispositif d'analyse automatique (1) selon la revendication 2, dans lequel quand l'unité d'estimation estime que le changement de lot de la solution d'étalonnage est la cause de variation, la valeur de mesurage de la substance de contrôle qualité est corrigée sur la base de la valeur de différence d'affichage et de la valeur de différence de mesurage.

7. Dispositif d'analyse automatique (1) selon la revendication 2, dans lequel quand l'unité d'estimation estime que le changement de lot de la solution d'étalonnage n'est pas la cause de variation, la valeur de différence de mesurage est affichée dans un graphique de variation de différence journalière indiquant un décalage dans la valeur de mesurage de la substance de contrôle qualité.
